# FASCICULE DE BREVET EUROPEEN

(11) **EP 1 987 335 B1**
(45) Date de publication et mention de la délivrance du brevet: **21.09.2016**
(21) Numéro de dépôt: 07731608.1
(22) Date de dépôt: 13.02.2007
(51) Int. Cl.: G01K 17/06

(54) **COMPTEUR D'ENERGIE THERMIQUE**
WÄRMEENERGIEMESSER
THERMAL ENERGY METER

(30) Priorité: 15.02.2006 FR 0601329
(43) Date de publication de la demande: 05.11.2008
(73) Titulaire: Itron France, 92130 Issy les Moulineaux (FR)
(72) Inventeur: BOUZID, Tarek, F-71000 Macon (FR)
(74) Mandataire: Howson, Richard G.B.
(86) Numéro de dépôt international: PCT/FR2007/050783
(87) Numéro de publication internationale: WO 2007/093732

(56) Documents cités:
- WO-A-89/11639
- DE-A1- 3 340 802
- DE-A1- 19 900 774
- US-A- 3 585 850

## Description

L'invention concerne un compteur d'énergie thermique et plus précisément un insert de mesure appelé capsule pour compteur d'énergie thermique de fluide, en particulier d'eau, destiné à être monté dans une direction dite d'insertion dans une bâche comportant une canalisation d'entrée du fluide et une canalisation de sortie du fluide et comportant un carter destiné à être solidarisé avec ladite bâche et délimitant une chambre de mesure de débit reliée à un calculateur contenant un ensemble électronique de calcul et d'affichage, cet insert contenant une sonde de mesure de la température du fluide présentant une extrémité de mesure.

Il est connu de réaliser un tel insert avec une sonde de température logée au niveau du carter de telle sorte que son extrémité de mesure soit en contact avec le fluide en écoulement dans la chambre de mesure de débit. L'axe longitudinal de la sonde est disposé perpendiculairement à la direction dite d'insertion et tangentiellement à la veine de fluide limitée par le carter.

Un tel insert connu pose les problèmes techniques suivants.

Une telle disposition de la sonde de température ne permet pas une mesure précise de la température du fluide entrant dans le compteur.

En effet, l'extrémité de mesure est en contact avec le fluide en écoulement sous le carter mais n'est pas placée au coeur de l'écoulement puisque l'axe longitudinal de la sonde est tangent à la veine de fluide sous le carter.

Le fluide en écoulement dans ladite chambre de mesure sous le carter après avoir quitté la canalisation d'entrée, change de température, à savoir diminue ou augmente de température selon que l'application soit le chauffage ou le rafraîchissement, à cause du carter qui constitue une surface d'échange thermique avec l'extérieur. Les couches de fluide qui subissent le plus d'écart de température sont celles qui sont à proximité de la paroi du carter, là où est positionnée l'extrémité de mesure de la sonde de température, d'une part à cause de la proximité à la surface d'échange thermique et d'autre part à cause de l'atténuation des vitesses d'écoulement par phénomène de couches limites, Il en résulte des erreurs dans la mesure de température relativement importantes qui se manifestent surtout aux bas débits.

Par ailleurs, avec un tel insert connu, la position angulaire de la sonde par rapport à la canalisation d'entrée de la bâche est difficilement maîtrisée. Elle dépend en effet de la réalisation de la liaison de l'insert, et plus précisément du carter avec la bâche, en général par filetage, et du couple de serrage au montage de l'insert sur la bâche. Ce dernier problème technique complique surtout une éventuelle correction électronique de la mesure de température qui, en fonction du niveau de précision souhaité, serait nécessaire à cause des deux problèmes cités ci-dessus.

Du document de brevet WO 89/11639, est connu un insert de mesure comportant une sonde de mesure de la température, dont l'extrémité de mesure vient se loger dans un orifice fermé du côté du passage de l'eau dans la bâche par un capuchon hautement conducteur de la chaleur. Un autre insert de mesure est connu du document DE 199 00 774 A1.

Par un tel agencement, la mesure de température présente immanquablement une imprécision entraînée par la présence du capuchon.

L'invention résout ces problèmes et, pour ce faire, elle propose un insert de mesure appelé capsule pour compteur d'énergie thermique de fluide, en particulier d'eau, destiné à être monté dans une direction dite d'insertion dans une bâche comportant une canalisation d'entrée du fluide et une canalisation de sortie du fluide et comportant un carter destinée à être solidarisée avec ladite bâche délimitant une chambre de mesure de débit reliée à un calculateur contenant un ensemble électronique de calcul et d'affichage, l'insert contenant une sonde de mesure de la température du fluide présentant une extrémité de mesure, caractérisé en ce que ladite sonde est disposée de sorte que son extrémité de mesure est destinée à être introduite à l'intérieur d'au moins une desdites canalisations de la bâche, afin d'être en contact direct avec le fluide y circulant.

Grâce à un tel agencement de sonde, la température est mesurée avant entrée de l'eau dans l'insert ou après sortie de l'eau de l'insert et donc respectivement, sans tenir compte ou en tenant compte des échanges thermiques au travers du carter mais sans être pénalisé par la proximité aux parois du carter qui délimitent la veine d'eau.

Selon un mode de réalisation préféré, ladite sonde a son axe longitudinal sensiblement parallèle à ladite direction d'insertion.

Très avantageusement, ladite extrémité de mesure est disposée de façon à venir à proximité de l'axe longitudinal de ladite canalisation.

Ainsi cette extrémité de mesure est disposée au coeur de l'écoulement, où elle permet une mesure optimale de la température du fluide entrant ou sortant.

De préférence, ladite canalisation est la canalisation d'entrée du fluide.

Ainsi, grâce à l'invention, la mesure est effectuée sans tenir compte des pertes dû au compteur.

Avantageusement, ladite sonde est logée dans ledit carter présentant à une de ses extrémités une bride circulaire destinée à venir buter contre un joint d'étanchéité porté par ladite bâche, la solidarisation du dit carter sur ladite bâche se faisant grâce à une bague de vissage qui est en libre rotation par rapport au carter et qui comporte un filetage porté par sa paroi externe destiné à venir coopérer avec un filetage d'un logement annulaire de la bâche assurant la poussée de la bride contre ledit joint.

De préférence, un jeu est prévu afin de permettre une translation de faible course de la bague de vissage par rapport au reste de l'insert, afin de permettre le montage et le démontage de l'insert par rapport à la bâche.

De préférence, un dispositif de repérage est prévu sur ledit carter et permet l'orientation angulaire de l'insert par rapport à ladite canalisation.

Ledit dispositif de repérage peut être constitué d'un logement agencé dans ledit carter et destiné à coopérer avec une tige de positionnement.

Et, ledit logement de repérage peut être diamétralement opposé à ou être du même côté qu'un logement agencé sur ledit carter et recevant la sonde.

L'invention concerne également un compteur d'énergie thermique de fluide, en particulier d'eau, constitué d'un insert tel que précisé ci-dessus, monté dans une bâche, de préférence de type coaxial.

L'invention est décrite ci-après plus en détail à l'aide de figures représentant un mode de réalisation préférée de l'invention.
Les figures 1A, 1B et 1C sont des vues de face et en coupe transversale d'une bâche destinée à recevoir un insert conforme à l'invention.
Les figures 2A, 2B et 2C sont des vues de face et en coupe transversale d'un insert conforme à l'invention.
Les figures 3A, 3B et 3C sont des vues de face et en coupe transversale d'une bâche équipée d'un insert conforme à l'invention.
Les figures 4A, 4B, 4C et 4D sont des vues de face et en coupe transversale d'une bâche équipée d'un insert conforme à l'invention spécifiant un perfectionnement de l'invention.

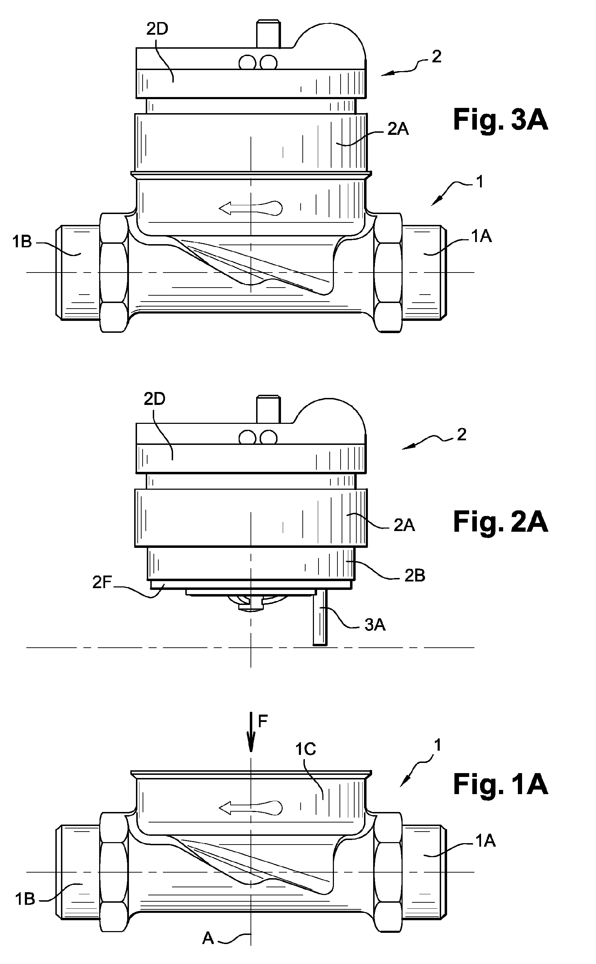

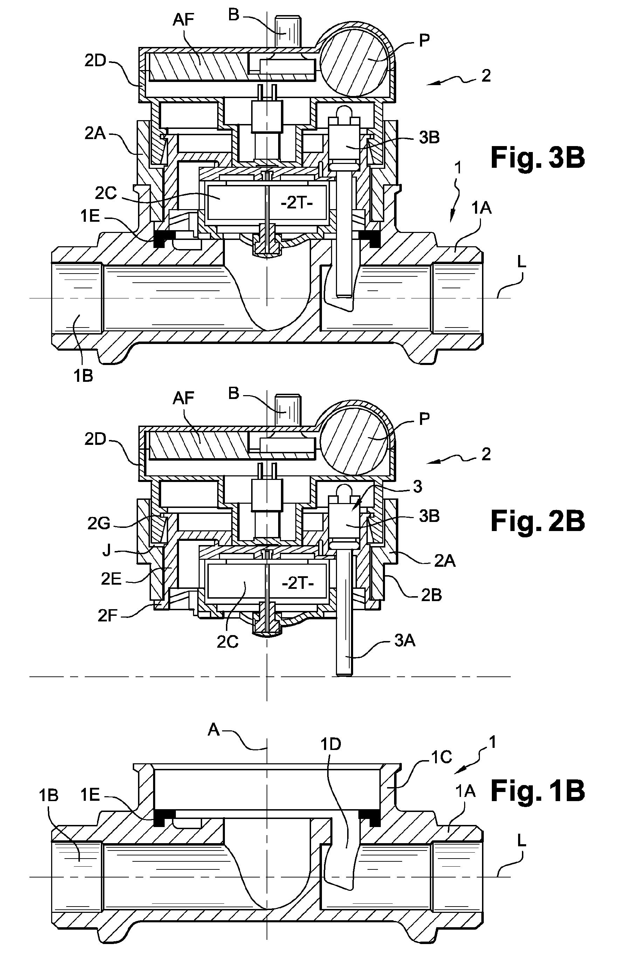

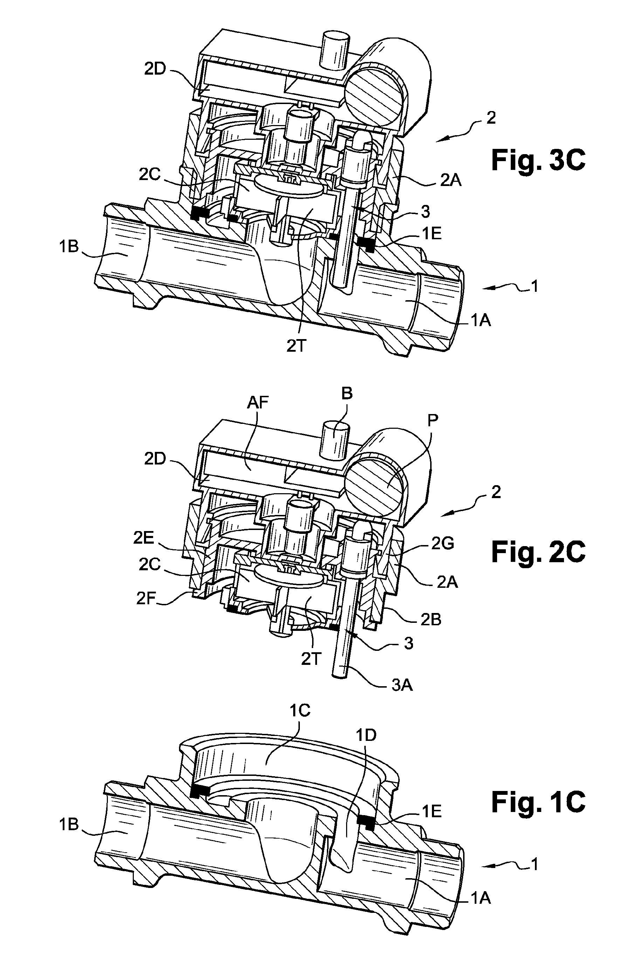

Sur les figures 1A, 1B et 1C, est donc représentée une bâche 1 destinée à recevoir un insert de mesure 2 appelé capsule pour compteur d'énergie thermique de fluide, en particulier d'eau, destiné à être monté dans une direction dite d'insertion illustrée par la flèche F.

Cette bâche 1 comporte une canalisation d'entrée du fluide 1 A et une canalisation de sortie du fluide 1 B. Ces deux canalisations débouchent dans un logement 1C dans lequel peut être disposé l'insert 2 qui y est solidarisé en général par vissage sur un filetage porté par la paroi annulaire interne de ce logement 1C.

Selon l'exemple illustré, la canalisation d'entrée 1 A débouche dans le logement 1C par un orifice 1 D, afin d'assurer une entrée annulaire de l'eau dans l'insert, et la canalisation de sortie 1 B débouche dans le logement 1C coaxialement à l'axe central A de ce logement 1C, afin d'assurer une sortie d'eau centrale de l'insert.

La bâche porte un joint d'étanchéité 1 E circulaire placé au fond du logement 1C.

L'insert 2 conforme à l'invention est illustré sur les figures 2A, 2B et 2C.

Cet insert 2 comporte un carter cylindrique 2E en forme de coupelle renversée destiné à être solidarisé avec la bâche 1, grâce à une bague de vissage 2A qui comporte un filetage porté par sa paroi externe 2B. Le carter délimite ainsi une chambre de mesure 2C ici équipée d'une turbine 2T, et est relié au fond du boîtier d'un calculateur 2D. Le calculateur contient, entre autre, un ensemble électronique de calcul et d'affichage AF, une pile P et un bouton poussoir B.

L'insert 2 contient une sonde 3 de mesure de la température du fluide présentant une extrémité de mesure 3A. Cette sonde a son axe longitudinal sensiblement parallèle à la direction d'insertion F, son extrémité de mesure 3A étant destinée à être introduite à l'intérieur d'au moins une des canalisations de la bâche, ici dans la canalisation d'entrée 1 A de la bâche.

La sonde 3 est logée dans le carter 2E. Ce carter présente à son extrémité opposée au fond du boîtier du calculateur 2D une bride circulaire 2F destinée à venir buter contre le joint d'étanchéité 1 E porté par la bâche lors de l'insertion de l'insert 2 dans le logement 1C de cette bâche.

La bâche est de type coaxial, comme clairement illustré sur les figures 1A et 1C. Sa canalisation d'entrée 1 A débouche sur un canal d'entrée annulaire qui entoure une embouchure de sortie centrale de sa canalisation de sortie 1 B.

Le carter 2E est solidaire par son autre extrémité tournée vers le calculateur au fond de boîtier de ce dernier au moyen d'un agencement de clippage 2G comportant une bride de clipage. La tête de connexion 3B de la sonde 3 est vissée au fond d'un logement aménagé au niveau du carter 2E et elle peut être connectée électriquement à l'ensemble électronique de calcul et d'affichage AF par des fils ou autres pistes électriques traversant le fond du boîtier du calculateur 2D.

La bague de vissage 2A entoure d'une part le carter 2E et d'autre part la bride de clippage 2G du fond du boîtier du calculateur 2D. L'agencement relatif de ces pièces est donc conçu afin de permettre la libre rotation de la bague de vissage 2A autour du carter et du fond du boîtier du calculateur 2D qui sont mutuellement solidaires en translation mais peuvent pivoter l'un par rapport à l'autre.

Un jeu J est également prévu afin de permettre une translation de faible course de la bague de vissage par rapport au carter et au fond du boîtier du calculateur. La bague de vissage a ainsi la possibilité d'entraîner le reste de l'insert vers le fond du logement 1 C dans la bâche au montage et de le dégager de la bâche au démontage, malgré des dépôts de tartre et autres matériaux qui peuvent se former pendant la durée de vie du produit liant l'insert à la bâche.

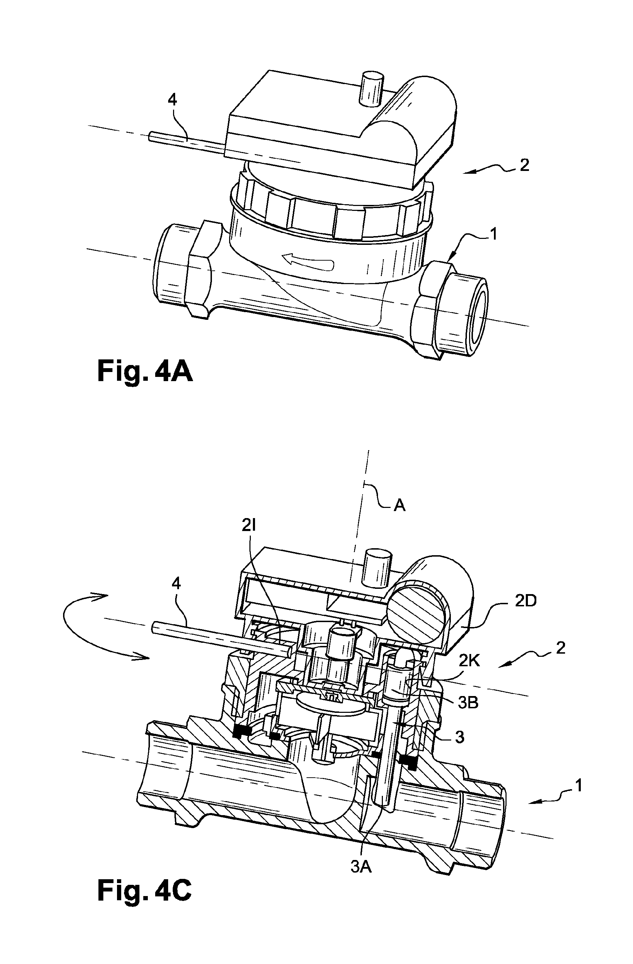

Comme illustré sur les figures 4A à 4D, un dispositif de repérage 2I est prévu sur le carter 2E et permet l'orientation angulaire de l'insert par rapport à une des canalisations de la bâche, de manière à pouvoir limiter le défaut de positionnement angulaire de la sonde de température 3 par rapport à l'axe de la canalisation dans laquelle elle est introduite.

Ce dispositif de repérage 2I est de préférence constitué d'un logement formé d'un orifice borgne agencé dans le carter.

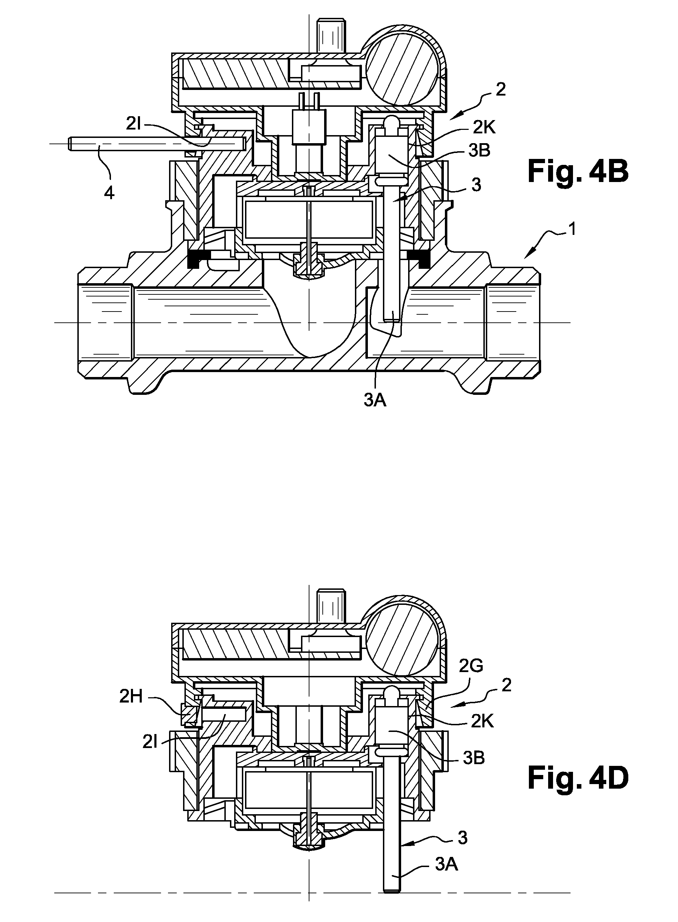

Le montage et le démontage de l'insert 2 sur la bâche 1 vont maintenant être précisés en référence aux figures 3A, 3B, 3C, 4A, 4B et 4C.

Comme représenté sur la figure 4A à 4C, une tige d'orientation 4 est d'abord placée dans le logement de repérage 2I du carter 2E après avoir enlevé un bouchon 2H qui le ferme comme illustré sur la figure 4D. La libre rotation du boîtier du calculateur par rapport au carter permet d'aligner l'axe d'un trou agencé sur la bride de clipage 2G du fond de boîtier AD où était placé le bouchon 2H, avec l'axe du logement de repérage 2I agencé dans le carter, avant de placer la tige d'orientation 4, qui traverse donc ce trou de la bride de clipage et s'emboîte dans le logement de repérage du carter.

Le dispositif de repérage 2I est placé dans le carter de telle sorte qu'au moment du montage de l'insert 2 dans la bâche 1, le maintien, par l'installateur, de la tige 4 parallèlement à la canalisation de sortie garantit le positionnement angulaire de la sonde 3 de mesure de la température au-dessus de l'axe de la canalisation d'entrée 1 A dans laquelle la sonde de température doit être centrée.

Par rapport à l'axe central A, le logement de repérage 2I est donc placé soit du même côté que le logement 2K de la sonde 3, soit diamétralement opposé au logement 2K de la sonde. Dans l'exemple représenté, le logement de repérage 2I est diamétralement opposé au logement 2K de la sonde.

Pour son montage, l'insert 2 est amené dans le sens de la direction d'insertion F dans le logement de la bâche 1C et l'extrémité de mesure 3A de la sonde 3 est introduit dans l'orifice 1 D de la canalisation d'entrée 1 A. La bague de vissage 2A de l'insert est alors tournée et vissée dans le filetage porté par ce logement 1C, jusqu'à serrage de la bride 2F de l'enveloppe interne contre le joint d'étanchéité de la bâche 1 E tout en maintenant la tige d'orientation parallèle à l'axe de la canalisation de sortie 1 B de fluide.

Il est ici à noter un point important. La longueur de la sonde 3 est déterminée afin que son extrémité de mesure 3A soit alors disposée à proximité de l'axe longitudinal de la canalisation d'entrée 1 A.

Pour le démontage de l'insert 2, la bague de vissage 2A est tournée dans le sens inverse pour son dévissage du logement 1C de la bâche. Le désinstallateur peut se servir de la tige d'orientation placée dans le dispositif de repérage 2I, afin d'éviter toute sollicitation de la sonde qui risquerait de venir se tordre contre le fond de la bâche au démontage.

Grâce au jeu J déjà précisé, la bague de vissage est tout d'abord dévissée sans déplacement du reste de l'insert. Une fois le jeu J parcouru, elle vient en butée contre le fond du boîtier du calculateur 2D et entraîne avec elle le reste de l'insert dans la direction inverse à la direction d'insertion F.

L'invention n'est pas limitée au mode de réalisation spécifiquement décrit.

La sonde de mesure de température peut être disposée dans l'insert de façon à venir dans la canalisation d'entrée ou dans la canalisation de sortie de la bâche.

La chambre de mesure décrite est équipée d'une turbine mais toujours dans le cadre de l'invention elle peut être de conception différente, par exemple être équipée d'un piston oscillant, ou d'un dispositif à ultrasons, connu en soi dans le domaine des compteurs.

## Revendications

1. Insert de mesure (2) appelé capsule pour compteur d'énergie thermique de fluide, en particulier d'eau, destiné à être monté dans une direction dite d'insertion (F) dans une bâche (1) comportant une canalisation d'entrée du fluide (1A) et une canalisation de sortie du fluide (1B) et comportant un carter (2E) destinée à être solidarisée avec ladite bâche délimitant une chambre de mesure de débit (2C) reliée à un calculateur contenant un ensemble électronique de calcul et d'affichage, l'insert (2), contenant une sonde de mesure (3) de la température du fluide présentant une extrémité de mesure (3A), **caractérisé en ce que** ladite sonde est disposée de sorte que son extrémité de mesure (3A) est destinée à être introduite à l'intérieur d'au moins une desdites canalisations de la bâche, afin d'être en contact direct avec le fluide y circulant.

2. Insert selon la revendication 1, **caractérisé en ce que** ladite sonde a son axe longitudinal sensiblement parallèle à ladite direction d'insertion (F).

3. Insert selon la revendication 1 ou 2, **caractérisé en ce que** ladite extrémité de mesure (3A) est disposée de façon à venir à proximité de l'axe longitudinal (L) de ladite canalisation.

4. Insert selon l'une des revendications précédentes, **caractérisé en ce que** ladite canalisation est la canalisation d'entrée du fluide (1 A).

5. Insert selon l'une des revendications précédentes, **caractérisé en ce que** ladite sonde (3) est logée dans ledit carter (2E) présentant à une de ses extrémités une bride circulaire (2F) destinée à venir buter contre un joint d'étanchéité (1 E) porté par ladite bâche (1), la solidarisation du dit carter (2E) sur ladite bâche se faisant grâce à une bague de vissage (2A) qui est en libre rotation par rapport au carter et qui comporte un filetage porté par sa paroi externe (2B) destiné à venir coopérer avec un filetage d'un logement annulaire (1C) de la bâche 1 assurant la poussée de la bride (2F) contre ledit joint (1 E).

6. Insert selon l'une des revendications précédentes, **caractérisé en ce qu'**un jeu (J) est prévu afin de permettre une translation de faible course de la bague de vissage (2A) par rapport au reste de l'insert.

7. Insert selon l'une des revendications précédentes, **caractérisé en ce qu'**un dispositif de repérage (2I) est prévu sur ledit carter et permet l'orientation angulaire de l'insert par rapport à ladite canalisation.

8. Insert selon la revendication précédente, **caractérisé en ce que** ledit dispositif de repérage (2I) est constitué d'un logement agencé dans ledit carter et destiné à coopérer avec une tige de positionnement (4).

9. Insert selon la revendication précédente, **caractérisé en ce que** ledit logement de repérage (2I) est diamétralement opposé à un logement agencé sur ledit carter et recevant la sonde (3).

10. Compteur d'énergie thermique de fluide, en particulier d'eau, constitué d'un insert (2) selon l'une des revendications précédentes, monté dans une bâche (1).

11. Compteur selon la revendication précédente, **caractérisé en ce que** ladite bâche est de type coaxial.

## Patentansprüche

1. Messeinsatz (2), Kapsel genannt, für einen Wärmeenergiezähler eines Fluids, insbesondere Wasser, der dazu bestimmt ist, in einer so genannten Einsetzrichtung (F) in einem Behälter (1) montiert zu werden, der eine Eingangsleitung des Fluids (1A) und eine Ausgangsleitung des Fluids (1B) umfasst, und umfassend ein Gehäuse (2E), das dazu bestimmt ist, mit dem Behälter verbunden zu sein, wobei es eine Durchflussmesskammer (2C) begrenzt, die mit einem Rechner verbunden ist, der eine elektronische Rechen- und Anzeigeeinheit enthält, wobei der Einsatz (2) eine Messsonde (3) der Temperatur des Fluids enthält, die ein Messendstück (3A) aufweist, **dadurch gekennzeichnet, dass** die Sonde derart angeordnet ist, dass ihre Messendstück (3A) dazu bestimmt ist, in das Innere mindestens einer der Leitungen des Behälters eingeführt zu werden, um in direktem Kontakt mit dem darin zirkulierenden Fluid zu sein.

2. Einsatz nach Anspruch 1, **dadurch gekennzeichnet, dass** die Sonde eine Längsachse hat, die im Wesentlichen parallel zur Einsetzrichtung (F) ist.

3. Einsatz nach Anspruch 1 oder 2, **dadurch gekennzeichnet, dass** das Messendstück (3A) derart angeordnet ist, dass es in die Nähe der Längsachse (L) der Leitung gelangt.

4. Einsatz nach einem der vorhergehenden Ansprüche, **dadurch gekennzeichnet, dass** die Leitung die Eingangsleitung des Fluids (1A) ist.

5. Einsatz nach einem der vorhergehenden Ansprüche, **dadurch gekennzeichnet, dass** die Sonde (3) in dem Gehäuse (2E) angeordnet ist, das an einem seiner Enden einen kreisförmigen Flansch (2F) aufweist, der dazu bestimmt ist, an einer Dichtung (1E) zum Anschlag zu gelangen, die von dem Behälter (1) getragen wird, wobei die Verbindung des Gehäuses (2E) auf dem Behälter dank eines Schraubrings (2A) erfolgt, der in Bezug zum Gehäuse frei drehbar ist und ein Gewinde umfasst, das von seiner Außenwand (2B) getragen wird und dazu bestimmt ist, mit einem Gewinde einer ringförmigen Lagerung (1C) des Behälters 1 zusammenzuwirken, das den Schub des Flansches (2F) gegen die Dichtung (1E) gewährleistet.

6. Einsatz nach einem der vorhergehenden Ansprüche, **dadurch gekennzeichnet, dass** ein Spiel (J) vorgesehen ist, um eine Translation mit geringem Hub des Schraubringes (2A) in Bezug zum Rest des Einsatzes zu ermöglichen.

7. Einsatz nach einem der vorhergehenden Ansprüche, **dadurch gekennzeichnet, dass** eine Erkennungsvorrichtung (2I) auf dem Gehäuse vorgesehen ist und die Winkelausrichtung des Einsatzes in Bezug zur Leitung ermöglicht.

8. Einsatz nach dem vorhergehenden Anspruch, **dadurch gekennzeichnet, dass** die Erkennungsvorrichtung (2I) von einer Lagerung gebildet ist, die in dem Gehäuse angeordnet und dazu bestimmt ist, mit einer Positionierstange (4) zusammenzuwirken.

9. Einsatz nach dem vorhergehenden Anspruch, **dadurch gekennzeichnet, dass** die Erkennungslagerung (2I) zu einer Lagerung, die auf dem Gehäuse angeordnet ist und die Sonde (3) aufnimmt, diametral gegenüberliegend angeordnet ist.

10. Wärmeenergiezähler eines Fluids, insbesondere Wasser, der von einem Einsatz (2) nach einem der vorhergehenden Ansprüche, der in einem Behälter (1) montiert ist, gebildet ist.

11. Zähler nach dem vorhergehenden Anspruch, **dadurch gekennzeichnet, dass** der Behälter koaxialen Typs ist.

## Claims

1. Measurement insert (2) referred to as a cartridge for a meter measuring the thermal energy of a fluid, in particular water, intended to be mounted in the so-called insertion direction (F) into a reservoir (1) having a fluid inlet pipe (1A) and a fluid outlet pipe (1 B), said insert having a housing (2E) intended to be joined to said reservoir and delimiting a flow measurement chamber (2C) connected to a calculator containing an electronic calculation and display unit, the insert (2) containing a fluid temperature measurement probe (3) having a measurement end (3A), **characterised in that** said probe is disposed in such a way that the measurement end (3A) thereof is intended to be introduced into at least one of said pipes of the reservoir, in order to be in direct contact with the fluid circulating therein.

2. Insert as claimed in claim 1, **characterised in that** the longitudinal axis of said probe is substantially parallel to said direction of insertion.

3. Insert as claimed in claim 1 or claim 2, **characterised in that** said measurement end (3A) is disposed in such a way that it comes close to the longitudinal axis (L) of said pipe.

4. Insert as claimed in any one of the preceding claims, **characterised in that** said pipe is the fluid inlet pipe (1A).

5. Insert as claimed in any one of the preceding claims, **characterised in that** said probe (3) is accommodated in said housing (2E) having at one of its ends a circular flange (2F) intended to come into abutment against a sealing joint (1 E) supported by said reservoir (1), the joining of said housing (2E) to said reservoir being performed by means of a screwing ring (2A) which is freely rotatable in relation to the housing and which has a thread supported by its external wall (2B) intended to co-operate with a thread of an annular compartment (1 C) of the reservoir (1) which ensures the pressing of the flange (2F) against said joint (1 E).

6. Insert as claimed in any one of the preceding claims, **characterised in that** a clearance (J) is provided in order to enable a translation of the screwing ring (2A) over a short distance in relation to the rest of the insert.

7. Insert as claimed in any one of the preceding claims, **characterised in that** a locating device (21) is provided on said housing and enables the angular orientation of the insert with respect to said pipe.

8. Insert as claimed in the preceding claim, **characterised in that** said locating device (21) consists of a recess arranged in said housing and intended to co-operate with a positioning rod (4).

9. Insert as claimed in the preceding claim, **characterised in that** said locating device (21) is diametrically opposed to a recess which is arranged on said housing and receives the probe (3).

10. Meter measuring the thermal energy of a fluid, in particular of water, consisting of an insert (2) as claimed in any one of the preceding claims, mounted in a reservoir (1).

11. Meter as claimed in the preceding claim, **characterised in that** said reservoir is of the coaxial type.
